# EUROPÄISCHE PATENTSCHRIFT

(11) **EP 0 689 473 B1**
(45) Veröffentlichungstag und Bekanntmachung des Hinweises auf die Patenterteilung: **27.12.1996**
(21) Anmeldenummer: 94910384.0
(22) Anmeldetag: 07.03.1994
(51) Int. Cl.: B01D 19/04

(54) **SCHAUMBEKÄMPFUNGSMITTEL FÜR DIE NAHRUNGSMITTEL-, LACK- UND PAPIERINDUSTRIE**
ANTI-FOAMING AGENT FOR THE FOOD, VARNISH AND PAPER INDUSTRIES
AGENT ANTIMOUSSE POUR LES INDUSTRIES DE L'ALIMENTATION, DES VERNIS ET DU PAPIER

(30) Priorität: 15.03.1993 DE 4308140
(43) Veröffentlichungstag der Anmeldung: 03.01.1996
(73) Patentinhaber: Henkel Kommanditgesellschaft auf Aktien, 40191 Düsseldorf (DE)
(72) Erfinder: WOLLENWEBER, Horst-Werner, D-40597 Düsseldorf (DE); MÖLLER, Thomas, D-40593 Düsseldorf (DE); SLADEK, Hans-Jürgen, D-47800 Krefeld (DE); SCHULTE, Heinz-Günther, D-45481 Mühlheim (DE); GRESS, Wolfgang, D-42111 Wuppertal (DE); EICKEN, Ulrich, D-41352 Korschenbroich (DE); FISCHER, Herbert, D-40229 Düsseldorf (DE); DE HAUT, Christian, F-77310 Boissise-le-Roi (FR)
(86) Internationale Anmeldenummer: EP9400683
(87) Internationale Veröffentlichungsnummer: WO9421348

(56) Entgegenhaltungen:
- GB-A- 1 336 428
- DATABASE WPI Section Ch, Week 7347, Derwent Publications Ltd., London, GB; Class A82, AN 73-72184U & JP,B,48 038 358 (TOHO CHEMICAL IND O LTD)

## Beschreibung

Die Erfindung betrifft die Verwendung von Alkylenoxid-Einheiten enthaltenden Blockcopolymeren als Schaumbekämpfungsmittel bei der Herstellung oder Weiterverarbeitung von Nahrungsmitteln, Lacken, Farben, Papier und bei Fermentationsprozessen.

Bei der industriellen Herstellung und/oder Verarbeitung von Nahrungsmitteln kommt der Bekämpfung und Verhütung von auftretendem Schaum beträchtliche Bedeutung Zu. So können beispielsweise bei der industriellen Verarbeitung zuckerhaltiger Pflanzensäfte, wie sie im großen Maßstab bei der Gewinnung von Zuckerrüben erfolgt, besondere Schwierigkeiten durch übermäßige Schaumentwicklung in der Saftgewinnung, -reinigung und in den Verdampfern auftreten. Die in der Zuckerindustrie einzusetzenden Schaumbekämpfungsmittel müssen selbstverständlich physiologisch unbedenklich sein. Dasselbe gilt für Schaumbekämpfungsmittel, die bei der Herstellung von Kartoffelfertigprodukten wie Chips oder Pommes Frites oder aber auch bei der Erzeugung von Backhefe unter Verwendung von Melasse eingesetzt werden. Zusätzlich müssen die Schaumbekämpfungsmittel in der kartoffelverarbeitenden Industrie noch dazu in der Lage sein, den schwer zu bekämpfenden Stärkeschaum zu regulieren. Insgesamt erwartet der Praktiker zudem stets Schaumbekämpfungsmittel, die in kleinen Anwendungsmengen hohe Spontan- und Langzeitwirkung haben.

Für die Entschäumung in der Zucker- und Hefeindustrie sind seit langem Fette und Öle wie Rüb-, Erdnuß-, Olivenöle sowie Wollfett in Gebrauch. Auch synthetische Ester wie Fettsäuremonoglyceride, Fettsäurepolyglykolester und synthetische Alkohole wie Polyalkylenglykole und Alkylenoxidaddukte an Fettalkohole sind für diesen Zweck vorgeschlagen worden. Obgleich mit diesen Verbindungen eine gewisse Schaumunterdrückung erreicht werden kann, ist aber jedoch häufig die notwendige Einsatzmenge zu hoch bzw. die Wirksamkeit nur bei bestimmten Temperaturen und nicht über weite Temperaturbereiche gegeben.

Bei Lacken und Farben kann durch Homogenisieren der Lack- bzw. Farbbestandteile Luft eingerührt werden. Dies ist besonders nachteilig, da entweder sehr lange vom Anwender gewartet werden muß, bis diese Luftbläschen zerplatzt sind, bevor er mit dem Lack- bzw. Farbaufstrich beginnen kann oder der Lack- bzw. Farbaufstrich zeigt Bläschen. Derartige Lack- bzw. Farbaufstriche mit Oberflächenstörungen sind nicht nur optisch unschön, sondern auch weniger haltbar, da getrocknete Bläschen zu leichtem Abblättern der Filme führen. Um sowohl für den Homogenisiervorgang als auch für den Auftrag die störenden Luftbläschen zu vermeiden, werden am effektivsten Schaumbekämpfungsmittel auf Basis von Silikonen zugesetzt. Obgleich mit diesen Schaumbekämpfungsmitteln die Luftblasen hervorragend zerstört werden können, haben diese den großen Nachteil, daß der Farb- bzw. Lackaufstrich auf verschiedensten zu bestreichenden Untergründen, beispielsweise Glas, ungleich ist. Vermutlich bewirken die stark hydrophoben Silikone keine gute gleichmäßige Benetzung des zu beschichtenden Untergrunds.

Auch in der Papierfabrikation können aufgrund hohen Luftgehaltes im Wasserkreislauf bei Papiermaschinen Schäume gebildet werden, die zu Störungen führen. So können Schaumflecken auf dem Papier auftreten, wenn Schaum mit flotiertem Schmutz bei der Blattbildung auf die Papierbahn gelangt. Da bei der Papierherstellung auch immer höhere Arbeitsgeschwindigkeiten der Maschinen angewendet werden, steigt die Gefahr der Untermischung von Luft in die Fasersuspension. Die untergemischte Luft stört in Form von Luftblasen den Entwässerungsvorgang des Papierstoffes auf der Papiermaschine und führt zu einer porösen Struktur des Papierblattes. Diese Nachteile werden durch die neuen Papiermaschinen verstärkt, da nun die Wasserkreisläufe immer häufiger geschlossen sind. Durch die geschlossenen Systeme reichern sich schaumbildende und schaumstabilisierende Stoffe an. Außerdem kann sich die Temperatur des im Kreise geführten Wassers der Papiermaschine im Laufe der Produktion ändern. Daher werden auch bei der Papierherstellung Entschäumer benötigt, die in weiten Temperaturbereichen in geringen Mengen lang wirksam sind.

Aus der internationalen Anmeldung WO 92/11074 sind Entschäumer auf Basis von Carbonsäurederivaten beispielsweise Ester und Amide von Zitronensäure, Weinsäure, Bernsteinsäure, Maleinsäure und Ethylendiamintetraessigsäure bekannt. Diese Entschäumer können direkt oder emulgiert in Wasser bei der Papierherstellung als auch bei der Papierbeschichtung eingesetzt werden. Sofern die Entschäumer in Form von wäßrigen Emulsionen eingesetzt werden, sind zusätzlich Emulgatoren in der Entschäumerformulierung enthalten wie die bekannten ethoxylierten Fettalkohole, ethoxylierten Fettsäuren und Propylenoxid-Ethylenoxidblockpolymerisate. Nachteilig an solchen Emulgator enthaltenden Entschäumermischungen ist jedoch, daß diese Emulgatoren selber in gewissem Umfang zur Stabilisierung der Luftbläschen beitragen können. Abgesehen davon, muß an zunächst eine Formulierung herstellen, damit diese Verbindungen überhaupt in Form einer wäßrigen Emulsion eingesetzt werden können. Letztendlich neigen Mischungen von Verbindungen mit unterschiedlicher Emulsionsfähigkeit in Wasser häufiger zu Entmischungserscheinungen wie Aufrahmungen.

Aufgabe der vorliegenden Erfindung war es, Schaumbekämpfungsmittel zur Verfügung zu stellen, die in geringen Mengen eine gute Spontanwirkung haben und diese Wirkung auch möglichst lange behalten. Des weiteren sollten sie so maßgeschneidert werden können, daß sie über weite Temperaturbereiche wirksam sind. In der Farben- und Lackindustrie sollten diese Produkte nicht nur eine gute entschäumende Wirkung haben, sondern auch einen Lack- bzw. Farbstrich ermöglichen, der homogen ist. Dies gilt im speziellen Fall auch für das Papiercoating, für das ein homogener gleichmäßiger Farbstrich ohne große Oberflächenstörung wichtig ist. Falls nötig sollten die Blockcopolymere auch zumindest teilweise ohne Zusatz von äußeren Emulgatoren in wäßrige Emulsionen überführbar sein.

Die Aufgabe wird erfindungsgemäß gelöst durch Verwendung von Alkylenoxid-Einheiten enthaltenden Blockcopolymeren, erhältlich durch Umsetzung von Homo- und/oder Mischpolymeren der Alkylenoxide mit Diisocyanaten oder Dicarbonsäurederivaten mit 2 bis 44 C-Atomen als Schaumbekämpfungsmittel bei der Herstellung oder Weiterverarbeitung von Nahrungsmitteln, Lacken, Farben, Papier und bei Fermentationsprozessen.

Im Sinne der Erfindung wird unter dem Begriff der Schaumbekämpfungsmittel solche Mittel verstanden, die in der Lage sind, als Entschäumer entstandenen Schaum zu unterdrücken und/oder entstehenden Schaum zu verhindern und als Entlüfter Luftblasen an die Oberfläche zu treiben.

Die erfindungsgemäß zu verwendenden Alkylenoxid-Einheiten enthaltenden Blockcopoylmere sind an und für sich bekannte Verbindungen, die auf bekannte Art und Weise durch Umsetzung von Homo- und/oder Mischpolymeren der Alkylenoxide mit Diisocyanaten und/oder Dicarbonsäurederivaten hergestellt werden können. Die Umsetzung mit Dicarbonsäurederivaten erfolgt vorzugsweise in Anwesenheit eines Veresterungskatalysators beispielsweise auf Basis einer Zinnverbindung und in der Regel bei Temperaturen von 60 bis 200 °C. Auch die Umsetzung mit Diisocyanaten kann in Anwesenheit von Katalysatoren, die die Urethanbildung beschleunigen, wie Dibutylzinndilaurat, erfolgen. Die Urethanumsetzungstemperaturen liegen in der Regel zwischen 20 °C bis 120 °C. Falls gewünscht, kann die Reaktion in Anwesenheit eines inerten Lösungsmittels, beispielsweise Xylol, durchgeführt werden, welches aber vorzugsweise nach Beendigung der Reaktion wieder von der Reaktionsmischung abgetrennt wird.

Besonders bevorzugt werden die Blockcopolymeren hergestellt durch Umsetzung von Homo- und/oder Mischpolymeren der Alkylenoxide mit Diisocyanaten oder Dicarbonsäurederivaten im molaren Verhältnis 2:1 bis 1:2. Sofern von dem streng stöchiometrischen Äquivalentverhältnis 1:1 abgewichen wird, entstehen Blockcopolymere, die noch freie Carbonsäurederivatgruppen, Isocyanatgruppen oder Hydroxylgruppen endständig tragen. Im Sinne der Erfindung können solche Blockcopolymere mit solchen freien funktionellen Endgruppen direkt eingesetzt werden. Man kann aber auch solche Blockcopolymere mit den freien funktionellen Endgruppen anschließend mit solchen monofunktionellen Verbindungen umsetzen, die mit den Endgruppen reagieren können. Derartige Umsetzungen werden häufig auch als Endgruppenverschluß bezeichnet. Der Endgruppenverschluß kann partiell oder vollständig erfolgen.

Als monofunktionelle Verbindungen sind beispielsweise Alkohole und Amine für Isocyanatendgruppen, Alkohole für Carbonsäurederivatgruppen und Mono-carbonsäuren für Hydroxylgruppen geeignet. Derartige Endgruppenverschlüsse sind bekannte Urethan-, Veresterung-, Umesterungs- und Harnstoffreaktionen.

Im Sinne der Erfindung werden als Alkylenoxide Ethylenoxid, Propylenoxid und Butylenoxid bevorzugt. Demnach sind Beispiele für Homo- und Mischpolymere der Alkylenoxide Polyethylenglykole, Polypropylenglykole, Polybutylenglykole oder auch Mischpolymere aus Ethylenoxid, Propylenoxid und/oder Butylenoxid.

Einer Ausführungsform der vorliegenden Erfindung entsprechend werden Blockcopolymere, die durch Umsetzung von Diisocyanaten erhältlich sind, verwendet. Als Diisocyanate eignen sich gegebenenfalls alkylsubstituierte Alkylendiisocyanate, beispielsweise Hexamethylendiisocyanat oder Trimethylhexamethylendiisocyanat, die von Isophorondiisocyanat, ortho-, metha- und para-Phenylendiisocyanat, den Methylendiphenyldiisocyanaten, den Methylendicyclohexyldiisocyanaten, den Toluylendiisocyanaten, den Xylylendiisocyanaten und den Tetramethylxylylendiisocyanaten sowie deren Gemischen ableitbaren Verbindungen. Geeignet sind davon Blockcopolymere, die durch Umsetzungen von beispielsweise den oben aufgezählten Diisocyanaten mit Homo- und/oder Mischpolymeren des Ethylenoxids und/oder Propylenoxids in molaren Verhältnissen von Hydroxylgruppen zu Isocyanatgruppen von 1:2 bis 2:1, vorzugsweise 1,1:1 bis 1,6:1 hergestellt worden sind. Besonders bevorzugt aus dieser Gruppe sind solche Blockcopolymere, die durch Umsetzung mit einer Mischung aus den Homopolymeren des Ethylenoxids (auch umgangssprachlich Polyethylenglykol) und des Propylenoxids (auch umgangssprachlich Polypropylenglykol) hergestellt worden sind. Derartige Blockcopolymere enthalten die Blöcke (C₃H₆O)ₐ und (C₂H₄O)_{b}, in denen sich die Zahlen a bzw. b aus den Molgewichten des Polypropylenglykols bzw. Polyethylenglykols ergeben. Von besonderer Bedeutung ist aber nicht nur das Molgewicht des Polypropylenglykols bzw. Polyethylenglykols, sondern die im Blockcopolymeren insgesamt enthaltende Menge an Polyethylenglykol und Polypropylenglykol. Aus diesem Grund ist es zweckmäßig anzugeben, wieviel Gew.-% die Mischung an Polypropylenglykol und Polyethylenglykol an dem jeweiligen Bestandteil aufweist. Besonders geeignet sind Blockcopolymere, die durch Umsetzung von Diisocyanaten mit einer Mischung aus 1 bis 99 Gew.-%, vorzugsweise 50 bis 95 Gew.-% Polypropylenglykol und 1 bis 99 Gew.-% Polyethylenglykol, vorzugsweise 5 bis 50 Gew.-% Polyethylenglykol, hergestellt worden sind. Je höher der Anteil an Polyethylenglykol ist, desto größere Wirksamkeit zeigen die Blockcopolymeren bei höheren Temperaturen. Demnach ist es über die Einsatzmenge an Polypropylenglykol und Polyethylenglykol möglich, Entschäumer herzustellen, die in bestimmten und gewünschten Temperaturbereichen ihr Maximum an Wirksamkeit als Schaumbekämpfungsmittel haben. Wünscht man aus der beschriebenen Gruppe der Blockcopolymeren Schaumbekämpfungsmittel, die bei niedrigeren Temperaturen ein Maximum an Wirksamkeit aufweisen, so ist es bevorzugt solche einzusetzen, die durch Umsetzung mit einer Mischung aus 75 bis 95 Gew.-% Polypropylenglykol und 5 bis 25 Gew.-% Polyethylenglykol hergestellt worden sind. So haben sich im Außenbereich bei Transport und Wäsche von Zuckerrüben solche Blockcopolymere als besonders geeignet herausgestellt, die durch Umsetzung von Diisocyanaten ausgewählt aus der Gruppe Toluylendiisocyanat, Tetramethylxylylendiisocyanat, Hexamethylendiisocyanat und Trimethylhexamethylendiisocyanat mit einer Mischung aus 75 bis 95 Gew.-% Polypropylenglykol und 25 bis 5 Gew.-% Polyethylenglykol hergestellt worden sind.

Einer zweiten Ausführungsform der vorliegenden Erfindung werden Blockcopolymere verwendet, die erhältlich sind durch Umsetzung von Dicarbonsäurederivaten mit Homo- und/oder Mischpolymeren von Alkylenoxiden. Brauchbare Dicarbonsäurederivate sind formale Abkömmlinge von linearen alpha,omega-Dicarbonsäuren oder von zweifach carboxylsubstiuierten Aromaten. Als Carbonsäurederivate werden sowohl Dicarbonsäuren, Dicarbonsäureanhydride, Dicarbonsäurechloride und niedere Alkylester von Dicarbonsäuren, insbesondere Methyl- oder Ethylester verstanden. Geeignete Dicarbonsäurederivate sind Derivate der Oxalsäure, Malonsäure, Bernsteinsäure, Maleinsäure, Fumarsäure, Adipinsäure, Pimilinsäure, Korksäure, Azelainsäure, Brassylsäure, Phthalsäure, Isophthalsäure, Terephthalsäure, Glutarsäure, Dimerfettsäure und deren Gemische. Als Beispiel für eine Mischung ist die unter dem Handelsnamen Sokalan^{R} DCS bekannte Mischung der Dicarbonsäuren herauszustellen, die Adipinsäure, Glutarsäure und Bernsteinsäure enthält. Aus der Gruppe der Dicarbonsäurederivate werden insbesondere Bernsteinsäure-, Fumarsäure- und/oder Maleinsäurederivate bevorzugt.

Aus der Gruppe der Blockcopolymere, die eine Estergruppe tragen durch die Umsetzung mit den Dicarbonsäurederivaten, sind besonders solche bevorzugt, die durch Umsetzung von Dicarbonsäurederivaten, vorzugsweise Dicarbonsäureanhydride, mit Homo- und/oder Mischpolymeren des Ethylenoxids oder Propylenoxids im molaren Verhältnis von Hydroxylgruppen zu Carboxylgruppen von 1:2 bis 2:1, vorzugsweise 1,2:1 bis 1,6:1 erhältlich sind. Auch innerhalb dieser Gruppe der Blockcopolymere, die eine Estergruppe aufweisen durch die Umsetzung mit Dicarbonsäurederivaten, ist es besonders bevorzugt Homopolymere des Ethylenoxids (Polyethylenglykol) und/oder des Propylenoxids (Polypropylenglykol) einzusetzen. Obgleich auch Blockcopolymere als Schaumbekämpfungsmittel wirksam sind, die nur Polypropylenglykol oder Polyethylenglykol enthalten, ist es besonders bevorzugt diese Gruppe Blockcopolymere zu verwenden, die durch Umsetzung von Dicarbonsäurederivaten mit einer Mischung aus 1 bis 99 Gew.-%, vorzugsweise über 50 Gew.-% Polypropylenglykol und 1 bis 99 Gew.-%, vorzugsweise unter 50 Gew.-% Polyethylenglykol, hergestellt worden sind. Bei Verwendung der Blockcopolymeren als Schaumbekämpfungsmittel für niedrige Temperaturen, das heißt unter 35 °C, empfehlen sich solche Blockcopolymere, die durch Umsetzung von Dicarbonsäurederivaten mit einer Mischung aus 85 bis 99 Gew.-% Polypropylenglykol und 1 bis 15 Gew.-% Polyethylenglykol hergestellt worden sind. Für Anwendungen bei höheren Temperaturen z. B. im Fermentationsbereich können Blockcopolymere eingesetzt werden, die sogar nur aus Polyethylenglykol hergestellt worden sind bzw. deren Mischung über 55 Gew.-% Polyethylenglykole neben Polypropylenglykole aufweist.

Die Polyethylenglykole, die man als Homopolymere des Ethylenoxids auffaßt, können ein Molekulargewicht von 200 bis 35.000, vorzugsweise von 200 bis 6.000 haben. Die Polypropylenglykole, die Homopolymere des Propylenoxids, können ein Molekulargewicht von 300 bis 20.000, vorzugsweise 1.000 bis 6.000 haben. Auch wenn Mischpolymere des Ethylenoxids und des Propylenoxids oder auch zusammen mit Butylenoxids verwendet werden, ist es bevorzugt, mit Molekulargewichten bis 10.000 vorzugsweise bis 3.000 zu arbeiten.

Die erfindungsgemäß zu verwendenden Blockcopolymere sind flüssige bis hochviskose Produkte, die in Einzelfällen auch schon als fest zu bezeichnen sind. Bei Zugabe der Blockcopolymere zu schaumbildenden Systemen tritt bereits in Gegenwart sehr geringer Mengen eine starke Minderung der Schaumbildung ein. Dabei sind die Blockcopolymere sowohl geeignet, bereits aufgetretenden Schaum zu mindern als auch präventiv Schaumbildung zu vermeiden sowie als Entlüfter zu wirken. Die Blockcopolymere können pur oder auch in Lösung bzw. Dispersion den Systemen zugesetzt werden. Sofern man Lösungen bzw. Dispersionen einsetzen will, können als flüssiges, organisches Medium beispielsweise Alkohole, Ester, Methylenchlorid etc. verwendet werden. Man kann aber auch Wasser als Lösemittel nehmen. Sofern die Blockcopolymere hohe Gehalte an Polyethylenglykolen und niedrigere Gehalte an Polypropylenglykole aufweisen, sind sie selbstemulgierbar in Wasser, das heißt ohne Zugabe von externen Emulgatoren können sie in Wasser emulgiert bzw. dispergiert werden. Sofern jedoch der hydrophobe Anteil an Polypropylenglykol in den Blockcopolymeren überwiegt, ist es hier notwendig, entweder andere Lösemittel zu verwenden oder externe Emulgatoren einzusetzen. Ob die Blockcopolymere selbstemulgierbar sind oder nicht, ist durch leichte Handversuche festzustellen, indem man die Substanzen mit Wasser versetzt und unter Rühren versucht zu emulgieren bzw. dispergieren.

Die Blockcopolymere können in der Papierindustrie bei der Zellstoffherstellung, beispielsweise bei der Sulfitzellstoffkochung, bei der Papiererzeugung als auch beim Papierstreichen (Papierbeschichten) eingesetzt werden. Des weiteren sind die Blockcopolymere verwendbar in der Nahrungsmittelindustrie, bei der Nahrungsmittelerzeugung und Verarbeitung, beispielsweise in der Zuckerindustrie bei der Rübenschwemme und beim Waschen und Schnitzeln der Zuckerrüben, bei der Extraktion des Zuckers aus den Rübenschnitzeln und der nachfolgenden Behandlung mit Kalkmilch als auch bei den mehrstufigen Verdampfern, in denen so lange Wasser entzogen wird, bis ein mit Zucker übersättigter Kristallbrei, die Füllmasse, entsteht. Ebenso können die Blockcopolymere in der Hefeindustrie bei der technischen Herstellung von Backhefe durch Fermentation verwendet werden. Hier tritt vor allem bei der aeroben Gärungsstufe sehr viel Schaum auf, der mit den Blockcopolymeren verhindert bzw. reduziert werden kann. Des weiteren können die Blockcopolymeren auch in der Kartoffelverarbeitung eingesetzt werden, da sie mit den schwer zu bekämpfenden Stärkeschaum fertig werden. Auch in der Lack- und Farbenindustrie können die Blockcopolymere ohne Probleme zugesetzt werden, das heißt vor allen Dingen, ohne daß sie ansonsten die Qualität der Lacke oder Farben in irgendeiner Weise beeinträchtigen und dennoch insgesamt den Schaum, der insbesondere durch Eintrag durch Luft entsteht, zerstören. Die Einsatzmenge an Blockcopolymeren variiert nach dem jeweiligen Einsatzgebiet. Prinzipiell ist man bemüht, möglichst geringe Mengen zusetzen zu müssen, alleine schon aus ökonomischen Gründen. In der Regel liegt die Einsatzmenge an den Blockcopolymeren im Bereich von 10 bis 10.000 ppm je nach Anwendungszweck.

Weiterer Gegenstand der vorliegenden Erfindung ist ein Verfahren zur Schaumbekämpfungsmittel bei der Herstellung und Weiterverarbeitung von Nahrungsmitteln, Lacken, Farben und von Papier sowie bei Fermentationsprozessen, dadurch gekennzeichnet, daß Alkylenoxid-Einheiten enthaltende Blockcopolymere, erhältlich durch Umsetzung von Homo- und/oder Mischpolymeren der Alkylenoxide mit Diisocyanaten oder Dicarbonsäurederivaten, zugesetzt werden.

Wie bereits im vorangegangenen Text genannt, können die Blockcopolymere bereits vor Schaumbildung als auch nach Schaumbildung zugesetzt werden, je nach dem was gewünscht wird bzw. wie stark der schon auftretende Schaum stören kann. Weitere Einzelheiten zu den Verfahren sind den obigen Ausführungen zu entnehmen.

### Beispiele

### A) Herstellung der Blockcopolymere

### AA) Ester von Bernsteinsäureanhydrid oder Sokalan DCS^{R}

Polyproyplenglykol (PPG) mit mittleren Molekulargewichten von 1000, 2000, 3000 oder 4000 wurde zusammen mit Polyethylenglykol (PEG) mit mittleren Molekulargewichten von 600 oder 1000 und Bernsteinsäureanhydrid oder Sokalan^{R} in Anwesenheit von 0,1 Gew.-% - bezogen auf Reaktanden - eines sauren Veresterungskatalysators (Swedcat^{R}3, der Fa. Swedstab) in siedendem Xylol unter Schutzgasatmosphäre verestert. Entstehendes Reaktionswasser wurde azeotrop abdestilliert. Die Umsetzung wurde solange geführt, bis praktisch keine Restsäurezahlen mehr vorliegen. Daraufhin wurde anschließend das Xylol im Vakuum abgezogen. Man erhielt viskose Flüssigkeiten. In Tabelle 1 sind die Äquivalente von eingesetztem PPG und PEG angeführt. Die Menge an eingesetztem Bernsteinsäureanhydrid oder Sokalan DCS^{R} wurde so bemessen, daß man das in Tabelle 1 angeführte Aquivalentverhältnis von Hydroxylgruppen an PPG und PEG zu Carboxylgruppen der Säurekomponente erhielt.

Sokalan DCS^{R} ist eine Mischung aus max. 33 % Adipinsäure, max. 50 Gew.-% Glutarsäure und max. 31 Gew.-% Bernsteinsäure der Fa. BASF (Kenndaten: Säurezahl ca. 820 mg KOH/g, Schmelzintervall ca. 95-130 °C).

**Tabelle 1**

| | A1 | A2 | A3 | A4 | A5 | A6 | A7 |
|---|---|---|---|---|---|---|---|
| PPG-1000 | 19,0 | 11,4 | - | - | - | - | - |
| PPG-2000 | - | - | 6,4 | - | - | - | - |
| PPG-3000 | - | - | - | 4,3 | - | 4,3 | - |
| PPG-4000 | - | - | - | - | 3,2 | - | 3,2 |
| PEG-600 | - | 1,0 | 1,0 | 1,0 | 1,0 | 1,0 | 1,0 |
| PEG-1000 | 1,0 | - | - | - | - | - | - |
| OH:COOH | 1,2 | 1,24 | 1,2 | 1,15 | 1,14 | 1,15 | 1,14 |
| Bernsteinsäureanhydrid | x | x | x | x | x | | |
| Sokalan DSC^{R} | | | | | | x | x |

| Gewichtsprozent | | | | | | | |
|---|---|---|---|---|---|---|---|
| PPG | 95 | 95 | 95,5 | 95 | 95 | 95 | 95 |
| PEG | 5 | 5 | 4,5 | 5 | 5 | 5 | 5 |

A8) bis A10) Die freien OH-Gruppen des Produkts A1 und A3 wurden mit Öl- oder Stearinsäure verestert:
A8) 0,5 Äquivalente A1 und 1 Äquivalent Stearinsäure;
A9) 0,5 Äquivalente A1 und 1 Äquivalent Ölsäure;
A10) 0,5 Äquivalente A3 und 1 Äquivalent Stearinsäure.

### AB) Urethane

PPG und PEG mit den in Tabelle 2 angegebenen mittleren Molekulargewichten wurden mit den in Tabelle 2 aufgeführten verschiedenen Diisocyanaten in Anwesenheit von 0,1 Gew.-% Dibutylzinndilaurat - bezogen auf Reaktanden - auf an sich bekannte Weise umgesetzt, bis keine freien NCO-Gruppen mehr nachweisbar waren. In Tabelle 2 sind die eingesetzten Äquivalente an PPG und PEG angegebenen sowie das Äquivalentverhältnis der von PPG + PEG stammenden Hydroxylgruppen zu den Isocyanatgruppen (OH:NCO).

**Tabelle 2**

| | B1 | B2 | B3 | B4 | B5 | B6 | B7 |
|---|---|---|---|---|---|---|---|
| PPG-2000 | 6,5 | 6,5 | 6,5 | 6,5 | - | - | 6,5 |
| PPG-3000 | - | - | - | - | 3,8 | - | - |
| PPG-4000 | - | - | - | - | - | 2,9 | - |
| PEG-600 | 1,0 | 1,0 | 1,0 | 1,0 | 1,0 | 1,0 | 1,0 |
| 2,4 Toluylendiisocyanat (TDI) | - | - | - | 5,0 | 4,0 | 3,2 | - |
| Tetramethylxylylendiisocyanat (TMXDI) | 6,4 | - | - | - | - | - | - |
| Hexamethylendiisocyanat (HMDI) | - | - | 6,4 | - | - | - | - |
| Isophorondiisocyanat (IPDI) | - | 6,4 | - | - | - | - | - |
| Trimethylhexamethylendiisocyanat (TMDI) | - | - | - | - | - | - | 6,4 |
| OH:NCO | 1,17 | 1,17 | 1,17 | 1,5 | 1,19 | 1,19 | 1,17 |

| Gewichtsprozent | | | | | | | |
|---|---|---|---|---|---|---|---|
| PPG | 95,5 | 95,5 | 95,5 | 95,5 | 95 | 95 | 95,5 |
| PEG | 4,5 | 4,5 | 4,5 | 4,5 | 5 | 5 | 4,5 |

### B) Entschämende Wirkung der Blockcopolymere

### BA) Entschäumer für Lacke auf Basis eines Styrol/Butadien-Bindemittels

Geprüft wurde entschäumende Wirkung der in A) beschriebenen Blockcopolymere in Lackdispersionen aus 80 Gewichtsteilen Acronal 290 D^{R} (Styrol/Butadien-Copolymer; ca. 50 gew.-%ig in Wasser der Fa. BASF) und 20 Gewichtsteilen entionisiertem Wasser nach der Dichtemethode. Dazu wurde zunächst die Dichte 1 der Lackdispersion, vorsichtig verrührt mit 0,2, 0,4 oder 0,6 Gew.-% Entschäumer, bestimmt. Anschließend wurde Luft eingerührt, in dem die Lackdispersion mit Entschäumer dem Pendraulik Labormischer Type LM 34 der Fa. Pendraulik Maschinen und Apparate GmbH ausgesetzt war, wobei eine Dispergierscheibe (0̸ 4 cm) den Schaum erzeugte. Nach 3 Minuten bei 3000 U/min wurde die Dichte 2 bestimmt. Der Quotient aus Dichte 1 und Dichte 2 gibt eine Aussage zur entschäumenden bzw. entlüftenden Wirkung. Je näher der Wert an 1 ist, desto besser ist der Entschäumer.

In Tabelle 3a und 3b sind die Ergebnisse zusammengefaßt.

**Tabelle 3a**

| **Entschäumer in Lackdispersionen** | | | | | | | | | | |
|---|---|---|---|---|---|---|---|---|---|---|
| Zusatz in Gew.-% | A1 | A2 | A3 | A4 | A5 | A6 | A7 | A8 | A9 | A10 |
| 0,2 | 0,93 | 0,96 | 0,95 | 0,79 | 0,88 | 0,87 | 0,91 | 0,97 | 0,95 | 0,95 |
| 0,4 | 0,93 | 0,97 | 0,97 | 0,87 | 0,94 | 0,90 | 0,92 | 0,97 | 0,95 | 0,96 |
| 0,6 | 0,93 | 0,97 | 0,97 | 0,89 | 0,90 | 0,93 | 0,93 | 0,97 | 0,95 | 0,96 |

**Tabelle 3b**

| **Entschäumer in Lackdispersionen** | | | | | | |
|---|---|---|---|---|---|---|
| Zusatz in Gew.-% | B1 | B2 | B3 | B4 1^{a)} | Vgl. ^{b)} | Blind |
| 0,2 | 0,84 | 0,72 | 0,88 | 0,8 | 0,78 | 0,52 |
| 0,4 | 0,92 | 0,80 | 0,90 | 0,8 | 0,83 | 0,52 |
| 0,6 | 0,91 | 0,86 | 0,88 | 0,90 | 0,82 | 0,52 |

| | | | | | | |
|---|---|---|---|---|---|---|
| ^{a)} Vgl. 1 Dehydran 1293^{R} | | | | | | |
| ^{b)} Blind = ohne Zusatz an Emulgator | | | | | | |

### BB) Entschäumer für Lacke auf Basis von Polyacrylat- und Polyurethan-Dispersionen

Die entschäumende Wirkung wurde nach der Freifallkreislaufmethode in folgenden Rezepturen bestimmt:
- 12,5 Gewichtsteile: Polyacrylat-Dispersion der Polyvinylchemie (Neocryl BT 44^{R}) oder
Polyurethan-Dispersion von Alberdingk und Boley (Alberdingk APU 1060^{R})
- 237,0 Gewichtsteile: vollentionisiertes Wasser
- 0,125 Gewichtsteile: erfindungsgemäße Entschäumer.

In Tabelle 4 sind die Ergebnisse zusammengefaßt. Nach der Freifallkreislaufmethode wird die zu untersuchende Rezeptur in einen 1000 ml Standzylinder gegeben und laufend umgepumpt mittels einer Heidolph-Schlauchpumpe mit 4 l/min. Dabei werden ein Silikonschlauch (12 X 1,5 mm) und zwei 2 Glasrohre (11 X 1,5 mm) angewendet. Das Ansaugrohr nähert sich 5 bis 10 mm des Bodens des Standzylinders. Das Ende des Zulaufrohrs wird an der 1000 ml - Markierung befestigt. Es wurde angegeben, wieviel Schaum- und Flüssigkeitsvolumina (in ml) nach verschiedenen Minuten auftraten. Je niedriger der Wert, desto besser die entschäumende Wirkung.

**Tabelle 4**

| **Entschäumer für Lacke** | | | | | |
|---|---|---|---|---|---|
| Bindemittel | Entschäumer nach Bsp. | Gesamtvolumina nach | | | |
| | | 5 | 10 | 20 | 30 Minuten |
| Neocryl BT 44^{R} | A1 | 170 | 170 | 170 | 170 |
| | A2 | 170 | 170 | 170 | 180 |
| | ohne | 1000 | 1000 | 1000 | 1000 |
| Alberdingk | A¹^{*} | 220 | 220 | 240 | 270 |
| APU 1060^{R} | ohne | 900 | 900 | 900 | 900 |

| | | | | | |
|---|---|---|---|---|---|
| * 10 gew.-%ige Lösung in Dipropylenglykolmonomethylether | | | | | |

Zur Prüfung der Verträglichkeit der Entschäumer in den Lackdispersionen wurde zu 100 Gewichtsteilen Alberdingk APU 1060^{R}, 1 Gewichtsteil einer 10 gew.-%igen Lösung von A1 in Dipropylenglykolmonomethylether gegeben. Diese Dispersion wurde auf Glas mit 100 µm-Spaltbreite gerakelt. Es traten kein Mikroschaum, Verlaufsstörungen oder Krater auf. Der nasse Film war störungsfrei.

### BC) Entschäumer für Zuckerrübensaft

In ein Schraubdeckelglas mit 500 ml Fassungsvermögen wurden 250 g einer 10 gew.-%igen wäßrigen Lösung von Zuckerrübenkraut und 200 Microliter einer 10 gew.-%igen Lösung von Blockcopolymeren in Isopropanol gegeben. Als Vergleich wurde stets eine Mischung mit einem Polyglycerinpartialester mit Ethylen- und Propylenoxid-Einheiten angesetzt. Beide Mischungen wurden im Glas parallel manuell 20 Mal geschüttelt. Danach bestimmte man die Zeit, die notwendig war, bis der Schaumberg sich zu einer Schaumoberfläche reduzierte, in die ein Loch (0̸ ca. 5 cm) gerissen war. Je kürzer die Zeit, desto besser die entschäumende Wirkung. In Tabelle 5 sind die Ergebnisse zusammengefaßt (Angaben in Sekunden).

**Tabelle 5**

| **Entschäumer für Zuckerrübensirup** | | | | | | | | | | | | | | | |
|---|---|---|---|---|---|---|---|---|---|---|---|---|---|---|---|
| A1 | A2 | A3 | A4 | A5 | A6 | A7 | A8 | A9 | A10 | B1 | B2 | B5 | B6 | B7 | Blindwert |
| 11 | 11 | 6 | 10 | 8 | 5 | 5 | 5 | 5 | 5 | 40 | 80 | 10 | 9 | 40 | > 1 Stunde |

### BD) Entschäumer für Papierstreichfarbe

Zu 100 ml einer Streichfarbe mit einer Viskosität nach Höppler von 155 mPas wurden 50 Microliter purem Entschäumer versetzt und 1 Minute bei 4.200 U/min mit einer Dispergierscheibe (0̸ 4 cm) eines Pendraulik Labormischers homogenisiert. Die homogenisierte Farbe wurde mit einem Rakel (Spaltbreite 200 µm) auf einer gereinigten, entfetteten Glasplatte gleichmäßig und zügig ausgestrichen.

Die Streichfarbe bestand aus
- 100: Gewichtsteilen Kaolin und Calciumcarbonat (70:30)
- 9,5: Gewichtsteilen Latex (Dow 685)
- 3,5: Gewichtsteilen Stärke
- 0,35: Gewichtsteilen Naßfestmittel Glyoxal
- 1,0: Gewichtsteilen Calciumstearat

Die trockene Farbschicht wurde visuell auf Blasenbildungen und Störungen wie Fischaugen untersucht und mit einer Punkteskala von 1 bis 6 (wobei 6 sehr gut ist und 1 sehr schlecht) bewertet. Als Vergleich diente ein Gemisch aus einem Fettsäureester, Fettalkohol und Polyglykol (Espum EPC 3061^{R} der Fa. Henkel KGaA). Bei Zusatz des Blockcopolyesters A2 (erfindungsgemäß) wurde der Farbstrich mit der Note 6, beim Vergleich mit der Note 4 bewertet.

## Patentansprüche

1. Verwendung von Alkylenoxid-Einheiten enthaltenden Blockcopolymeren, erhältlich durch Umsetzung von Homo- und/oder Mischpolymeren der Alkylenoxide mit Diisocyanaten oder Dicarbonsäurederivaten mit 2 bis 44 C-Atomen als Schaumbekämpfungsmittel bei der Herstellung oder Weiterverarbeitung von Nahrungsmitteln, Lacken, Farben, Papier und bei Fermentationsprozessen.

2. Verwendung nach Anspruch 1, dadurch gekennzeichnet, daß die Blockcopolymere erhältlich sind durch Umsetzung von Homo- und/oder Mischpolymeren der Alkylenoxide mit Diisocyanaten oder Dicarbonsäurederivaten im molaren Verhältnis 2:1 bis 1:2 und ggf. freie funktionelle Endgruppen der Blockcopolymere anschließend mit solchen monofunktionellen Verbindungen umgesetzt werden, die mit den freien funktionellen Endgruppen zu reagieren vermögen.

3. Verwendung nach Anspruch 1, dadurch gekennzeichnet, daß die Blockcopolymeren erhältlich sind durch Umsetzung von Diisocyanaten mit Homo- und/oder Mischpolymeren des Ethylenoxids und/oder Propylenoxids im molaren Verhältnis von Hydroxylgruppen zu Isocyanatgruppen von 1:2 bis 2:1, vorzugsweise 1,1:1 bis 1,6:1.

4. Verwendung nach Anspruch 3, dadurch gekennzeichnet, daß die Blockcopolymeren erhältlich sind durch Umsetzung von Diisocyanaten mit einer Mischung aus Polypropylenglykol und Polyethylenglykol, die 1 bis 99 Gew.-%, vorzugsweise 50 bis 95 Gew.-% Polypropylenglykol, und 1 bis 99 Gew.-% Polyethylenglykol, vorzugsweise 5 bis 50 Gew.-% Polyethylenglykol aufweist.

5. Verwendung nach Anspruch 3 oder 4, dadurch gekennzeichnet, daß die Blockcopolymere erhältlich sind durch Umsetzung von Diisocyanaten aus-gewählt aus der Gruppe Toluylendiisocyanat, Tetramethylxylylendiisocyanat, Hexamethylendiisocyanat und Trimethylhexamethylendiisocyanat mit einer Mischung aus 75 bis 95 Gew.-% Polypropylenglykol und 25 bis 5 Gew.-% Polyethylenglykol und als Schaumbekämpfungsmittel bei der Reinigung von Zuckerrüben verwendet werden.

6. Verwendung nach Anspruch 1, dadurch gekennzeichnet, daß die Blockcopolymere erhältlich sind durch Umsetzung von Dicarbonsäurederivaten, vorzugsweise Dicarbonsäureanhydride mit Homo- und/oder Mischpolymeren des Ethylenoxids und/oder Propylenoxids im molaren Verhältnis von Hydroxylgruppen zu Carboxylgruppen von 1:2 bis 2:1, vorzugsweise 1,2:1 bis 1,6:1.

7. Verwendung nach Anspruch 6, dadurch gekennzeichnet, daß die Blockcopolymere erhältlich sind durch Umsetzung von Dicarbonsäurederivaten mit einer Mischung aus Polypropylenglykol und Polyethylenglykol, die 1 bis 99 Gew.-%, vorzugsweise über 50 Gew.-%, Polypropylenglykol und 1 bis 99 Gew.-%, vorzugsweise unter 50 Gew.-%, Polyethylenglykol aufweist.

8. Verwendung nach einem der Ansprüche 1 bis 7, dadurch gekennzeichnet, daß die Polyethylenglykole als Homopolymere des Ethylenoxids ein Molekulargewicht von 200 bis 35.000, vorzugsweise von 200 bis 6.000, und die Polypropylenglykole als Homopolymere des Propylenoxids ein Molekulargewicht von 300 bis 20.000, vorzugsweise 1.000 bis 6.000 haben.

9. Verwendung nach einem der Ansprüche 1 bis 8, dadurch gekennzeichnet, daß die Blockcopolymere verwendet werden bei der Herstellung von Zucker, der Weiterverarbeitung von Kartoffeln, Fermentationsprozessen, in Lacken und Farben sowie bei der Papierherstellung und Papierbeschichtung.

10. Verwendung nach einem der Ansprüche 1 bis 9, dadurch gekennzeichnet, daß die Blockcopolymere in Mengen von 10 bis 10.000 ppm verwendet werden.

11. Verfahren zur Schaumbekämpfung bei der Herstellung und Weiterverarbeitung von Nahrungsmitteln, Lacken, Farben und von Papier sowie bei Fermentationsprozessen, dadurch gekennzeichnet, daß Alkylenoxid-Einheiten enthaltende Blockcopolymere, erhältlich durch Umsetzung von Homo- und/oder Mischpolymeren der Alkylenoxide mit Diisocyanaten oder Dicarbonsäurederivaten, zugesetzt werden.

## Claims

1. The use of block copolymers containing alkylene oxide units, obtainable by reaction of homopolymers and/or copolymers of alkylene oxides with diisocyanates or dicarboxylic acid derivatives containing 2 to 44 carbon atoms, as foam control agents in the production or further processing of foods, paints, lacquers, paper and in fermentation processes.

2. The use claimed in claim 1, characterized in that the block copolymers are obtainable by reaction of homopolymers and/or copolymers of alkylene oxides with diisocyanates or dicarboxylic acid derivatives in a molar ratio of 2:1 to 1:2 and, optionally, free functional terminal groups of the block copolymers are subsequently reacted with monofunctional compounds which are capable of reacting with the free functional terminal groups.

3. The use claimed in claim 1, characterized in that the block copolymers are obtainable by reaction of diisocyanates with homopolymers and/or copolymers of ethylene oxide and/or propylene oxide in a molar ratio of hydroxyl groups to isocyanate groups of 1:2 to 2:1 and preferably 1.1:1 to 1.6:1.

4. The use claimed in claim 3, characterized in that the block copolymers are obtainable by reaction of diisocyanates with a mixture of polypropylene glycol and polyethylene glycol containing 1 to 99% by weight and preferably 50 to 95% by weight of polypropylene glycol and 1 to 99% by weight and preferably 5 to 50% by weight of polyethylene glycol.

5. The use claimed in claim 3 or 4, characterized in that the block copolymers are obtainable by reaction of diisocyanates selected from the group consisting of tolylene diisocyanate, tetramethyl xylylene diisocyanate, hexamethylene diisocyanate and trimethyl hexamethylene diisocyanate with a mixture of 75 to 95% by weight of polypropylene glycol and 25 to 5% by weight of polyethylene glycol and are used as foam control agents in the cleaning of sugar beet.

6. The use claimed in claim 1, characterized in that the block copolymers are obtainable by reaction of dicarboxylic acid derivatives, preferably dicarboxylic anhydrides, with homopolymers and/or copolymers of ethylene oxide and/or propylene oxide in a molar ratio of hydroxyl groups to carboxyl groups of 1:2 to 2:1 and preferably 1.2:1 to 1.6:1.

7. The use claimed in claim 6, characterized in that the block copolymers are obtainable by reaction of dicarboxylic acid derivatives with a mixture of polypropylene glycol and polyethylene glycol containing 1 to 99% by weight and preferably more than 50% by weight of polypropylene glycol and 1 to 99% by weight and preferably less than 50% by weight of polyethylene glycol.

8. The use claimed in any of claims 1 to 7, characterized in that the polyethylene glycols as homopolymers of ethylene oxide have a molecular weight of 200 to 35,000 and preferably in the range from 200 to 6,000 while the polypropylene glycols as homopolymers of propylene oxide have a molecular weight of 300 to 20,000 and preferably in the range from 1,000 to 6,000.

9. The use claimed in any of claims 1 to 8, characterized in that the block copolymers are used in the production of sugar, in the further processing of potatoes, in fermentation processes, in paints and lacquers and in the manufacture and coating of paper.

10. The use claimed in any of claims 1 to 9, characterized in that the block copolymers are used in quantities of 10 to 10,000 ppm.

11. A process for controlling foam in the production and further processing of foods, lacquers, paints and paper and in fermentation processes, characterized in that block copolymers containing alkylene oxide units, obtainable by reaction of homopolymers and/or copolymers of alkylene oxides with diisocyanates or dicarboxylic acid derivatives, are added.

## Revendications

1. Utilisation de copolymères à blocs renfermant des unités d'oxyde d'alkyléne, obtenables par mise en réaction d'homopolymères et/ou de polymères mixtes d'oxydes d'alkylène avec des diisocyanates ou des dérivés d'acides dicarboxyliques comportant 2 à 44 atomes de C, comme agents de lutte contre la mousse dans la fabrication ou la transformation des aliments, des vernis, des peintures, du papier, et dans les processus de fermentation.

2. Utilisation selon la revendication 1, caractérisée en ce que les copolymères à blocs sont obtenables par mise en réaction d'homopolymères et/ou de polymères mixtes d'oxydes d'alkylène avec des diisocyanates ou des dérivés d'acides dicarboxyliques, dans un rapport molaire de 2:1 à 1:2, et en faisant réagir ensuite, le cas échéant, les groupes terminaux fonctionnels libres des polymères à blocs avec des composés monofonctionnels, qui sont susceptibles de réagir avec ces groupes terminaux fonctionnels libres.

3. Utilisation selon la revendication 1, caractérisée en ce que les copolymères à blocs sont obtenables par mise en réaction des diisocyanates avec des homopolymères et/ou des polymères mixtes d'oxyde d'éthylène et/ou d'oxyde de propylène, dans un rapport molaire entre les groupes hydroxyle et les groupes isocyanate compris entre 1:2 et 2:1, de préférence entre 1,1:1 et 1,6:1.

4. Utilisation selon la revendication 3, caractérisée en ce que les copolymères à blocs sont obtenables par mise en réaction de diisocyanates avec un mélange de polypropylèneglycol et de polyéthylèneglycol, qui est constitué de 1à 99 % en poids, de préférence de 50 à 95 % en poids de polypropylèneglycol, et de 1à 99 % en poids, de préférence de 5 à 50 % en poids de polyéthylèneglycol.

5. Utilisation selon la revendication 3 ou 4, caractérisée en ce que les copolymères à blocs sont obtenables par mise en réaction de diisocyanates sélectionnés parmi le groupe constitué du toluylénediisocyanate, du tétraméthylxylylènediisocyanate, de l'hexaméthylénediisocyanate et du triméthylhexaméthylènediisocyanate avec un mélange de 75 à 95 % en poids de polypropylèneglycol et de 25 à 5 % en poids de polyéthylèneglycol, et sont utilisés comme agent de lutte contre la mousse dans le nettoyage des betteraves sucrières.

6. Utilisation selon la revendication 1, caractérisée en ce que les copolymères à blocs sont obtenables par mise en réaction de dérivés d'acides dicarboxyliques, de préférence, d'anhydrides dicarboxyliques, avec des homopolymères et/ou des polymères mixtes d'oxyde d'éthylène et/ou d'oxyde de propylène, dans un rapport molaire entre les groupes hydroxyle et les groupes carboxyle de 1:2 à 2:1, de préférence de 1,2:1 à 1,6:1.

7. Utilisation selon la revendication 6, caractérisée en ce que les copolymères à blocs sont obtenables par mise en réaction de dérivés d'acides dicarboxyliques avec un mélange de polypropylèneglycol et de polyéthylèneglycol, qui est constitué de 1à 99 % en poids, de préférence de plus de 50 % en poids de polypropylèneglycol, et de 1à 99 % en poids, de préférence de moins de 50 % en poids de polyéthylèneglycol.

8. Utilisation selon une des revendications 1 à 7, caractérisée en ce que les polyéthylèneglycols possèdent, comme homopolymères de l'oxyde d'éthylène, un poids moléculaire allant de 200 à 35 000, de préférence de 200 à 6000 et que les polypropylèneglycols présentent, comme homopolymères de l'oxyde de propylène, un poids moléculaire allant de 300 à 20 000, de préférence de 1000 à 6000.

9. Utilisation selon une des revendications 1à 8, caractérisée en ce quel les copolymères à blocs sont utilisés dans la production du sucre, dans la transformation des pommes de terre, dans les processus de fermentation, dans les vernis et les peintures, ainsi que dans la fabrication et le couchage du papier.

10. Utilisation selon une des revendications 1 à 9, caractérisée en ce que les copolymères à blocs sont mis en oeuvre en quantités comprises entre 10 et 10 000 ppm.

11. Procédé de lutte contre la mousse dans la fabrication et la transformation des aliments, des vernis, des peintures et du papier, ainsi que dans les processus de fermentation, caractérisé en ce que l'on ajoute des copolymères à blocs renfermant des unités d'oxyde d'alkylène, obtenables par mise en réaction d'homopolymères et/ou de polymères mixtes des oxydes d'alkylène avec des diisocyanates ou des dérivés d'acides dicarboxyliques.
